# EUROPEAN PATENT SPECIFICATION

(11) **EP 3 470 262 B1**
(45) Date of publication and mention of the grant of the patent: **10.03.2021**
(21) Application number: 18194541.1
(22) Date of filing: 14.09.2018
(51) Int. Cl.: B60N 3/02, B60Q 1/26, B60R 1/06, B62D 25/16

(54) **TRACTOR**
TRAKTOR
TRACTEUR

(30) Priority: 10.10.2017 JP 2017197019
(43) Date of publication of application: 17.04.2019
(73) Proprietor: Kubota Corporation, Osaka-shi, Osaka 5568601 (JP)
(72) Inventor: TAMURA, Yoshiyuki, Osaka, 5900823 (JP)
(74) Representative: Müller-Boré & Partner Patentanwälte PartG mbB

(56) References cited:
- CN-U- 201 670 273
- JP-U- S57 195 929
- US-A1- 2015 246 641

## Description

### [Technical Field]

The present invention relates to a structure of getting on and off of a driving part in a tractor.

### [Background]

The tractor is provided with handrail parts on both front and rear parts of the getting on/off area in the getting on/off area on the right or the left side of the driving part, as disclosed in JP 2017-114328 A. With this, the driver can get on and off while holding the handrail part with the right and left hands.

JP S57 195929 U discloses a tractor comprising a handrail for getting on and off area on the side of the vehicle body and an illumination light provided on the outer handrail.

CN 201 670 273 U discloses an extending device for extending space of a tractor. The extending device is characterized in that a V-shaped bracket is fixed at the bottom of a tractor chassis, extension arms at two ends of the V-shaped bracket are respectively provided with a pedal assembly, and armrest rods are respectively disposed on two sides of each pedal, each armrest rod is sleeved with a width lamp, and a front mud guard is fixed on the inner side of each armrest rod.

The tractor may be provided with a lamp such as a headlamp, a vehicle width lamp, a turn signal lamp at the front part of the right or left side of the driving part as disclosed in JP 013-13922 A.

An object of the present invention is to provide a handrail part at the front part of the getting on/off area in a tractor and a lamp by effectively utilizing the handrail part when the lamp is provided at the front part of the driving part.

### [Means for Solving the Problem]

The present invention is defined by independent claim 1. Preferred embodiments are defined in the dependent claims. In particular, there is provided a tractor of the present invention comprising
a handrail frame provided at a front part of a getting on/off area on the right or left side of a driving part and provided with a handrail part on an upper part thereof,
a lamp attached to the handrail frame,
a harness disposed along the handrail frame and connected to the lamp, and a mounting member for mounting the harness along the handrail frame.

According to the present invention, when the handrail part is provided at the front part of the getting on/off area and the lamp is provided at the front part of the driving part, the lamp is attached to the handrail part. Thus, the handrail part can also be used as the support member of the lamp, and the structure can be simplified by combining parts.

As described above, when the lamp is attached to the handrail part, according to the present invention, the harness of the lamp is attached along the handrail frame by the mounting member; therefore, the harness is properly supported without being moved.

In the present invention,
a floor at a lower part of the driving part and a partition wall provided between the driving part and a front side engine are provided, and
the handrail frame comprises
the handrail part provided along the left and right direction, a vertical frame part extending downward from an outer end portion of the handrail part and connected to the floor, and a lateral frame part connected across the partition wall and the vertical frame part on a lower side of the handrail part, wherein
the lamp is attached to the vertical frame part, and the harness is attached along the lateral frame part by the mounting member.

According to the present invention, in the handrail frame, the lateral frame part is connected to the vertical frame part, so the harness attached to the lateral frame part and the lamp attached to the vertical frame part are close to each other. Thus, the harness necessarily extends from the lateral frame part to the vertical frame part and is connected to the lamp.

According to the present invention, in the handrail frame, the harness attached to the lateral frame part and the handrail part are separated from each other; therefore, when the operator holds the handrail part, the harness is not held together and the operator does not feel any discomfort.

Optionally, a support frame portion having a rearview mirror attached to the upper part is attached to the handrail frame so as to be positioned on the front side of the handrail part, and
the upper part of the vertical frame part is preferably bent toward the rear side so that the handrail part is separated rearward from the support frame portion.

When the rearview mirror is provided in the tractor, the rearview mirror is supported by the handrail frame. Thus, the handrail frame can also be used as the support member of the rearview mirror, and the structure can be simplified by combining parts.

When the rearview mirror is supported on the handrail frame as described above, the upper part of the vertical frame part is bent toward the rear side so that the handrail part is separated from the support frame portion of the rearview mirror toward the rear side. Therefore, when the operator holds the handrail part, the operator's hands rarely come into contact with the support frame portion of the rearview mirror and the operator does not feel any discomfort.

Optionally, a preventive member for preventing the scattering of soil from the front side to the driving part is attached to the handrail frame.

In the tractor, the mud splashed by a front wheel to the rear side may enter into the driving part.

By the preventive member being attached to the handrail frame, the soil is being prevented by entering into the driving part. In this case, the handrail frame can also be used as the support member of the preventive member, and the structure can be simplified by combining parts.

Optionally, the preventive member is attached to the handrail frame so that the upper end portion of the preventive member separates downward from the handrail, and
an opening for viewing the front side from the driving part is provided between the upper end portion of the preventive member and the handrail part.

Accordingly, the front side can be seen from the driving part through the opening provided between the upper end portion of the preventive member and the handrail part. Therefore, even if the preventive member is provided, it is unlikely that the front view is narrowed from the driving part.

Optionally, the lamp and the preventive member are preferably attached to the handrail frame in a jointly fastened state by a common connecting member.

Accordingly, the connecting member can be used for mounting the lamp and for mounting the preventive member, and the structure can be simplified by combining parts.

### [Brief Description of the Drawings]

[FIG. 1] is an overall side view of a tractor.
[FIG. 2] is an overall plan view of a tractor.
[FIG. 3] is an overall front view of a tractor.
[FIG. 4] is an exploded perspective view of a handrail frame, a lamp, a preventive member, a rearview mirror and the like.
[FIG. 5] is a front view of the vicinity of the handrail frame.
[FIG. 6] is a longitudinal sectional side view of the vicinity of the upper part of the handrail frame.
[FIG. 7] is an exploded perspective view of a frame, a lamp, a preventive member, a rearview mirror and the like.
[FIG. 8] is a front view of the vicinity of the frame.
[FIG. 9] is a longitudinal sectional side view of the vicinity of the upper part of the frame.

### [Mode for Carrying Out the Invention]

In the embodiments of the present invention, unless otherwise specified, F indicates a "forward direction", B indicates a "backward direction", U indicates an "upward direction", and D indicates a "downward direction". R indicates a "right direction" and L indicates a "left direction".

### (Overall structure of the tractor)

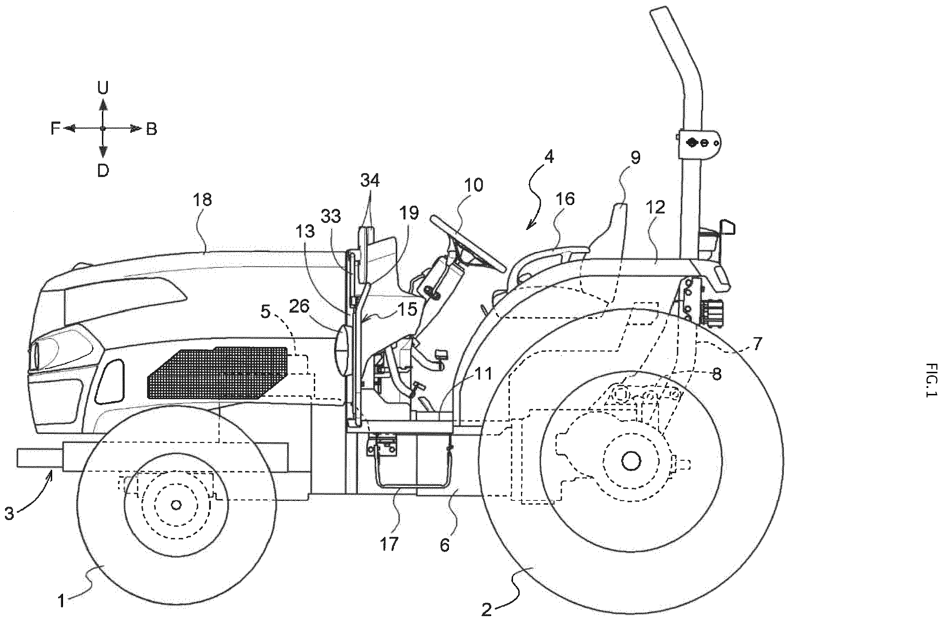

As shown in FIGS. 1, 2 and 3, the right and left front wheels 1, the right and left rear wheels 2, and a body frame 3 supported by the front wheels 1 and the rear wheels 2 are provided. The driving part 4 is supported by the body frame 3. The body frame 3 is provided with a frontside engine 5 and a rear-side transmission case 6, wherein the engine 5 and the transmission case 6 are connected to each other.

A hood 18 for covering the engine 5 is provided. The ROPS frame 7 is connected to the rear portion of the transmission case 6 and extended upward, and is disposed on the rear side of the driving part 4.

Various working devices (not shown) can be connected to the rear portion of the transmission case 6, and a lift arm 8 for elevating the connected working devices is provided at the rear portion of the transmission case 6.

### (Structure of the driving part)

As shown in FIGS. 1, 2 and 3, the driving part 4 comprises a driver's seat 9, a steering wheel 10 for steering the front wheels 1 and a floor 11 disposed at a lower portion of the driving part 4. The driving part 4 is disposed on the rear side of the engine 5 and is disposed on the upper side of the transmission case 6.

The fender 12 of the right and left rear wheels 2 is provided, and the right and left fenders 12 are disposed on the right and left of the driver's seat 9. The partition wall 13 is disposed between the driving part 4 and the engine 5, and the steering handle 10 is disposed on the rear side of the partition wall 13.

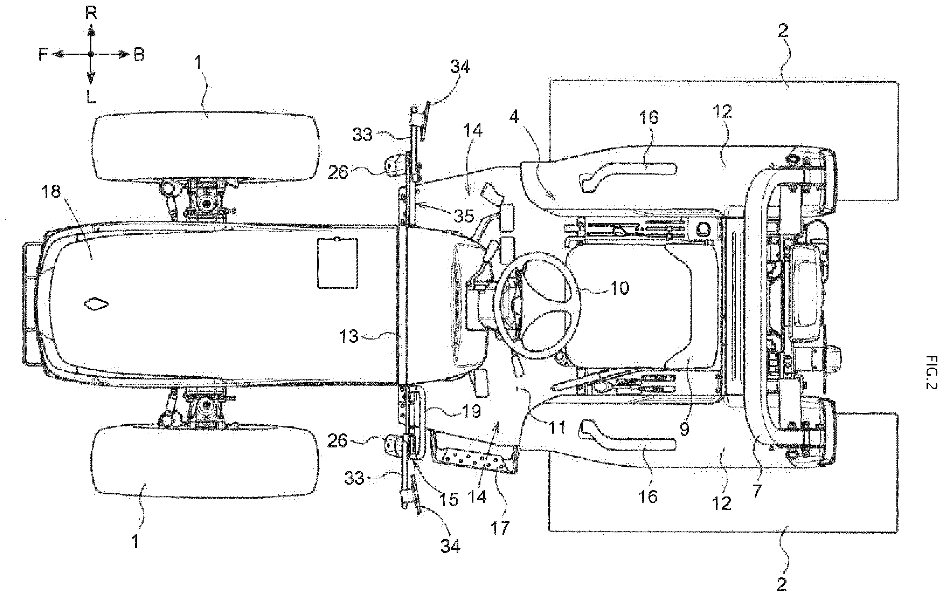

As shown in FIG. 2, between the partition wall 13 and the right fender 12 is a getting on/off area 14 on the right side of the driving part 4. Between the partition wall 13 and the left fender 12 is a getting on/off area 14 on the left side of the driving part 4. The operator gets on and off the driving part 4 mainly through the getting on/off area 14 on the left side.

As shown in FIGS. 1, 2 and 3, in the getting on/off area 14 on the left side, a handrail frame 15 is disposed in front part of the getting on/off area 14 on the left side and a handrail part 19 is provided on the upper part of the handrail frame 15. A handle part 16 is connected to the upper part of the left fender 12. A step 17 is connected to the left part of the floor 11, and the step 17 is disposed in the lower part of the getting on/off area 14 on the left side.

With the above configuration, the operator holds the handrail part 19 of the handrail frame 15 with the left hand in the getting on/off area 14 on the left side, holds the handle part 16 of the left fender 12 with the right hand, and keeps the leg on step 17 to get on and off the driving part 4.

### (Structure of the handrail frame)

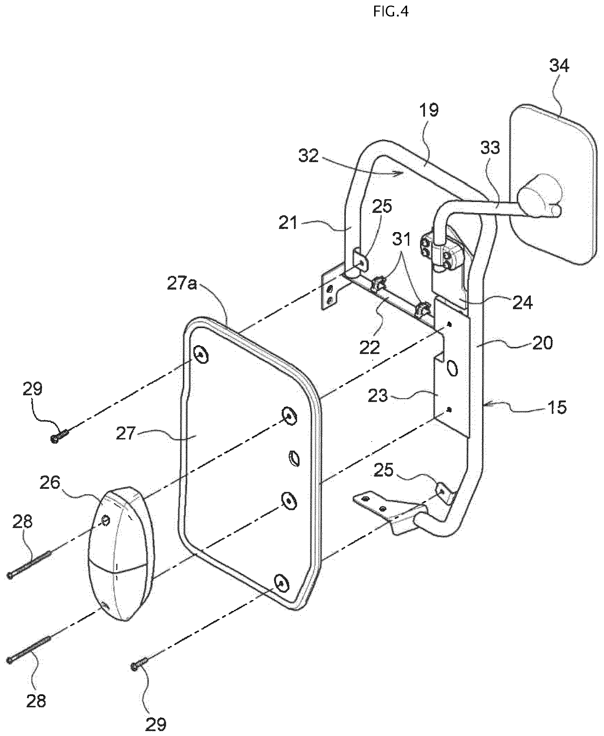

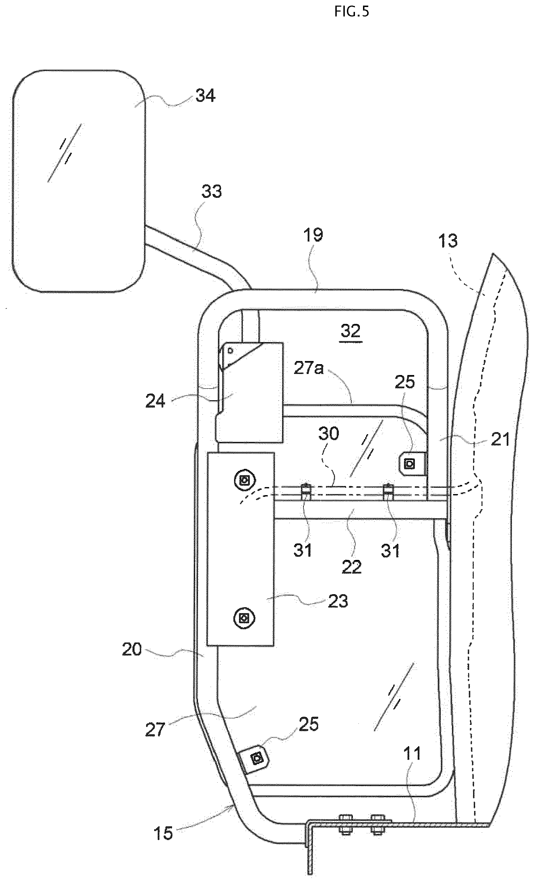

As shown in FIGS. 4 and 5, the handrail frame 15 comprises the handrail part 19, the vertical frame parts 20 and 21, the lateral frame part 22, and the mounting parts 23, 24 and 25.

The handrail part 19 is disposed along the left and right direction. The vertical frame part 20 is extended downward from the outer end portion of the handrail part 19 and connected to the floor 11. The lateral frame part 22 is connected across the partition wall 13 and the upper and lower intermediate parts of the vertical frame part 20, and the lateral frame part 22 is disposed along the left and right direction.

The vertical frame part 21 is extended downward from the inner end portion of the handrail part 19 and connected to the lateral frame part 22. The mounting part 23 is connected to the upper and lower intermediate parts of the vertical frame part 20 and the mounting part 24 is connected to the vertical frame part 20 so as to be positioned on the upper side of the mounting part 23. The mounting part 25 is connected to the lower part of the vertical frame part 20 and the lower part of the vertical frame part 21.

### (Structure of the lamp and the preventive member attached to handrail frame)

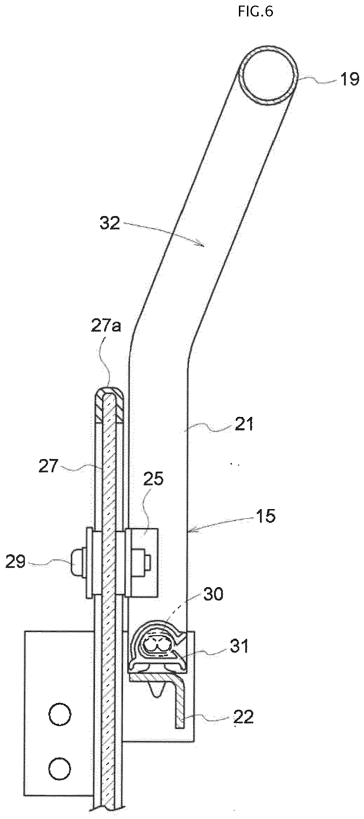

As shown in FIGS. 4, 5 and 6, the lamp 26 and the preventive member 27 are attached to the handrail frame 15.

The preventive member 27 has a flat plate shape and prevents the scattering of the soil from the front wheel 1 to the driving part 4. The preventive member 27 is disposed on the front side of the handrail frame 15 and is connected to the mounting parts 23 and 25 by connecting members 28 and 29 such as bolts.

The lamp 26 is provided with a vehicle width lamp and a direction indicator lamp. The lamp 26 is disposed on the front side of the preventive member 27 and is connected to the preventive member 27 and the mounting part 23 by the connecting member 28.

With the above configuration, the lamp 26 and the preventive member 27 are attached to the handrail frame 15 in a jointly fastened state by the common connecting member 28.

The lamp 26 is attached to the mounting part 23 by the connecting member 28 and is attached to the vertical frame part 20 via the mounting part 23.

The lamp 26 and the preventive member 27 do not extend beyond the vertical frame part 20 to the outside.

### (Arrangement of harness of lamp)

As shown in FIGS. 4, 5 and 6, the harness 30 comes out from the opening (not shown) in the vicinity of the partition wall 13. A C-shaped synthetic resin mounting member 31 is attached to the lateral frame part 22. The harness 30 is attached along the upper part of the lateral frame part 22 attached to the mounting member 31.

With the above configuration, the harness 30 is disposed and attached along the handrail frame 15.

The harness 30 passes from the lateral frame part 22 through the opening of the mounting part 23 (not shown) and the opening of the preventive member 27 (not shown), and is connected to the lamp 26.

### (Relation between handrail part and preventive member)

As shown in FIGS. 4, 5 and 6, the preventive member 27 is attached to the handrail frame 15 so that the upper end portion 27a of the preventive member 27 separates downward from the handrail part 19.

An opening 32 is formed between the upper end portion 27a of the preventive member 27 and the handrail part 19 so that the operator can see the front from the driving part 4 through the opening 32.

The upper end portion 27a of the preventive member 27 is separated downward from the handrail part 19 and is disposed above the lateral frame part 22 and the harness 30. The harness 30 is disposed on the rear side of the upper end portion 27a of the preventive member 27. Thereby, the harness 30 is protected by the preventive member 27 from the soil which flies from the front wheel 1 to the driving part 4.

### (Structure of the rearview mirror attached to the handrail frame)

As shown in FIGS. 4 and 5, the mounting part 24 is disposed above the upper end portion 27a of the preventive member 27. The support frame portion 33 is attached to the mounting part 24 and extended upwardly and outwardly while being positioned on the front side of the handrail part 19.

The rearview mirror 34 is attached to the upper part of the support frame portion 33. The rearview mirror 34 is disposed on the upper side of the handrail part 19 in a side view and is disposed on the outer side of the vertical frame part 20 in a front view.

As shown in FIGS. 4, 5, and 6, the upper portions of the lateral frame parts 20 and 21 are bent and extended to the upper side on the slanting rear side in a side view. As shown in FIGS. 1, 2, 4 and 5, with the support frame portion 33 positioned on the front side of the handrail part 19, the handrail part 19 is separated from the support frame portion 33 to the rear side in a side view.

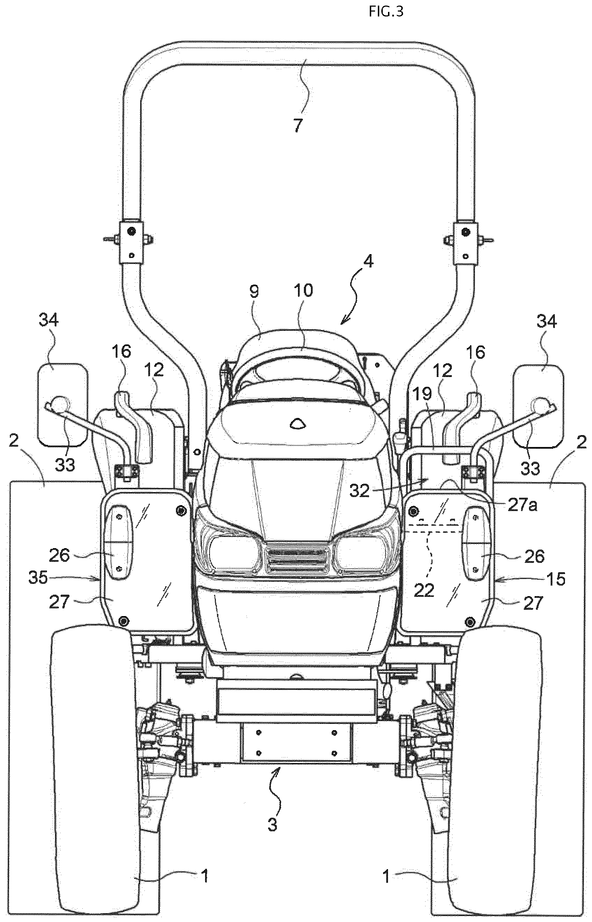

As shown in FIGS. 3, 4 and 5, the mounting part 24 and the support frame portion 33 are disposed close to the vertical frame part 20 in a front view. The mounting part 24 and the support frame portion 33 do not block the center of the opening 32, so when the operator views the front from the driving part 4 through the opening 32, the mounting part 24 and the support frame portion 33 hardly disturb an operator's view.

### (Structure related to getting on/off area on the right side of the driving part)

As shown in FIGS. 2 and 3, in the right getting on/off area 14, the frame 35 is disposed at the front part of the right getting on/off area 14, and a handle part 16 is connected to the upper part of the right fender 12.

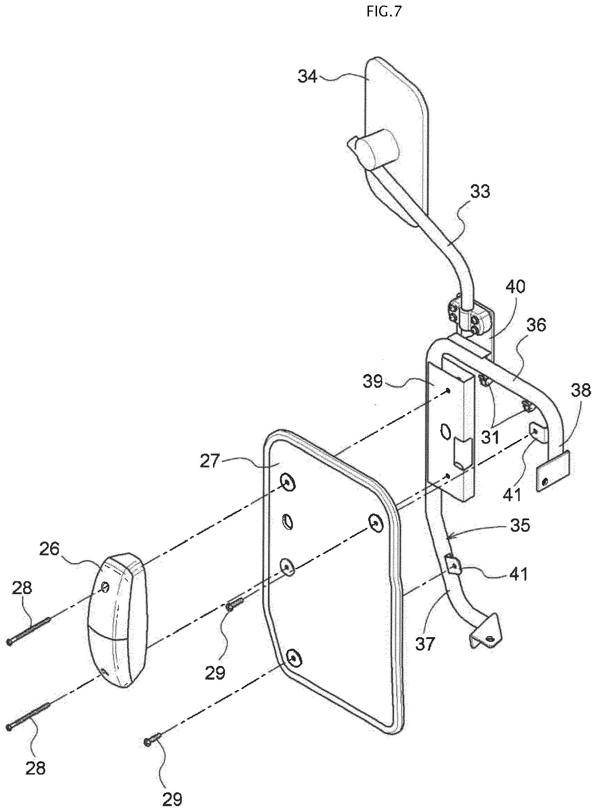

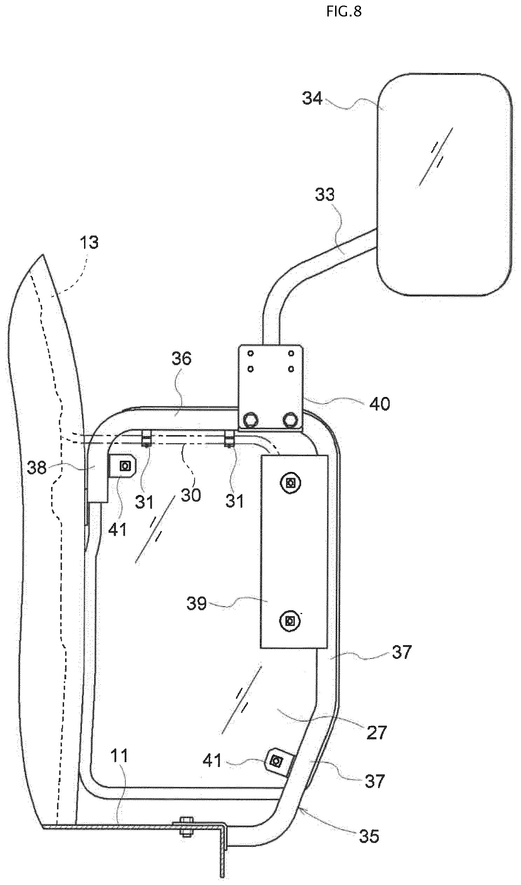

As shown in FIGS. 7 and 8, the frame 35 comprises the lateral frame part 36, the vertical frame parts 37 and 38, and the mounting parts 39, 40 and 41. The lateral frame part 36 is disposed along the left and right direction. The vertical frame part 37 is extended downward from the outer end portion of the lateral frame part 36 and connected to the floor 11. The vertical frame part 38 is extended downward from the inner end portion of the lateral frame part 36 and connected to the partition wall 13.

The mounting part 39 is connected to the upper part of the vertical frame part 37 and the mounting part 40 is connected upwards to the lateral frame part 36. The mounting part 41 is connected to the lower part of the vertical frame part 37 and the vertical frame part 38.

The lamp 26 and the preventive member 27 are attached to the frame 35. The preventive member 27 has a flat plate shape and prevents the scattering of the soil from the front wheel 1 to the driving part 4. The preventive member 27 is disposed on the front side of the frame 35 and is connected to the mounting parts 39 and 41 by connecting members 28 and 29 such as bolts.

The lamp 26 is provided with a vehicle width lamp and a direction indicator lamp. The lamp 26 is disposed on the front side of the preventive member 27 and is connected to the preventive member 27 and the mounting part 39 by the connecting member 28.

The support frame portion 33 is attached to the mounting part 40 and extends to the upper side and the outer side, and the rearview mirror 34 is attached to the upper part of the support frame portion 33. The rearview mirror 34 is disposed on the upper side of the lateral frame part 36 in a side view and disposed outside the vertical frame part 37 in a front view.

With the above configuration, the lamp 26 and the preventive member 27 are attached to the frame 35 in a jointly fastened state by the common connecting member 28.

The lamp 26 is attached to the mounting part 39 by the connecting member 28 and is attached to the vertical frame part 37 via the mounting part 39.

The lamp 26 and the preventive member 27 do not extend beyond the vertical frame part 37 to the outside.

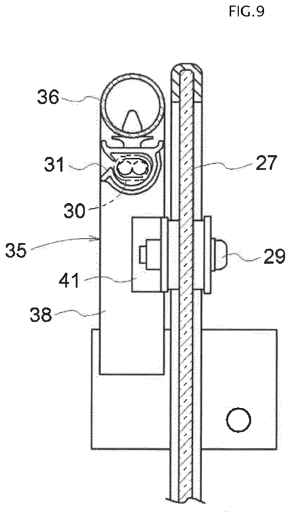

As shown in FIGS. 7, 8 and 9, the harness 30 comes out from the opening (not shown) in the vicinity of the partition wall 13. A C-shaped synthetic resin mounting member 31 is attached to the lateral frame part 36. The harness 30 is attached along the lower part of the lateral frame part 36 attached to the mounting member 31.

With the above configuration, the harness 30 is disposed and attached along the frame 35.

The harness 30 passes from the lateral frame part 36 through the opening of the mounting part 39 (not shown) and the opening of the preventive member 27 (not shown), and is connected to the lamp 26.

### (Another embodiment of the present invention)

As shown in FIGS. 4, 5 and 6, the handrail frame 15, the lamp 26, the preventive member 27 and the rearview mirror 34 may be provided at the front part of both the right and left getting on/off areas 14.

As shown in FIGS. 4, 5 and 6, the handrail frame 15, the lamp 26, the preventive member 27 and the rearview mirror 34 may be provided at the front part of the right getting on/off area 14. As shown in FIGS. 7, 8 and 9, the frame 35, the lamp 26, the preventive member 27, and the rearview mirror 34 may be provided at the front part of the left getting on/off area 14.

As shown in FIGS. 4, 5 and 6, in the handrail frame 15, the vertical frame part 21 may be abolish eliminated and the inner end portion of the handrail part 19 may be connected to the partition wall 13.

The ROPS frame 7 may be disposed at the front part of the driving part 4 so as to extend upward along the right and left portions of the partition wall 13 instead of being disposed on the rear side of the driving part 4.

### [Industrial Applicability]

The present invention can be applied to the tractor

### [Reference Numerals]

- 4: Driving part
- 5: Engine
- 11: Floor
- 14: Getting on/off area
- 15: Handrail frame
- 19: Handrail part
- 20: Vertical frame part
- 22: Lateral frame part
- 33: Support frame portion
- 34: Rearview mirror
- 26: Lamp
- 27: Preventive member
- 27a: Upper end portion of the preventive member
- 28: Connecting member
- 30: Harness
- 31: Mounting member
- 32: Opening

## Claims

1. A tractor, comprising
a handrail frame (15) provided at a front part of a getting on/off area (14) on the right or left side of a driving part (4) and provided with a handrail part (19) on an upper part thereof,
a lamp (26) attached to the handrail frame (15),
a harness (30) disposed along the handrail frame (15) and connected to the lamp (26), and
a mounting member (31) for mounting the harness (30) along the handrail frame (15),
the tractor further comprising
a floor (11) at a lower part of the driving part (4) and a partition wall provided between the driving part (4) and a front side engine (5), wherein
the handrail frame (15) comprises
the handrail part (19) provided along the left and right direction, a vertical frame part (20) extending downward from an outer end portion of the handrail part (19) and connected to the floor (11), **characterized in that** a lateral frame part (22) is connected across the partition wall and the vertical frame part (20) on a lower side of the handrail part (19), and wherein
the lamp (26) is attached to the vertical frame part (20), and
the harness (30) is attached along the lateral frame part (22) by the mounting member (31).

2. The tractor according to claim 1, wherein
a support frame portion (33) having a rearview mirror (34) attached to the upper part is attached to the handrail frame (15) so as to be positioned on the front side of the handrail part (19), and
the upper part of the vertical frame part (20) is bent toward the rear side so that the handrail part (19) is separated rearward from the support frame portion.

3. The tractor according to claim 1 or 2, wherein a preventive member (27) for preventing the scattering of soil from the front side to the driving part (4) is attached to the handrail frame (15).

4. The tractor according to claim 3, wherein
the preventive member (27) is attached to the handrail frame (15) so that the upper end portion of the preventive member (27a) separates downward from the handrail, and
an opening (32) for viewing the front side from the driving part (4) is provided between the upper end portion of the preventive member (27a) and the handrail part (19).

5. The tractor according to claim 3 or 4, wherein
the lamp (26) and the preventive member (27) are attached to the handrail frame (15) in a jointly fastened state by a common connecting member (28).

## Patentansprüche

1. Traktor, umfassend
einen Handlaufrahmen (15), der an einem vorderen Teil eines Ein-/Ausstiegsbereichs (14) auf der rechten oder linken Seite eines Antriebsteils (4) bereitgestellt ist und mit einem Handlaufteil (19) an einem oberen Teil davon versehen ist,
eine Lampe (26), die an dem Handlaufrahmen (15) angebracht ist,
einen Kabelbaum (30), der entlang des Handlaufrahmens (15) angeordnet und mit der Lampe (26) verbunden ist, und
ein Montageglied (31) zum Montieren des Kabelbaums (30) entlang des Handlaufrahmens (15),
wobei der Traktor ferner umfasst
einen Boden (11) an einem unteren Teil des Antriebsteils (4) und eine Trennwand, die zwischen dem Antriebsteil (4) und einem Frontseitenmotor (5) bereitgestellt ist, wobei
der Handlaufrahmen (15) umfasst
den Handlaufteil (19), der entlang der linken und rechten Richtung bereitgestellt ist, wobei sich ein vertikaler Rahmenteil (20) von einem äußeren Endabschnitt des Handlaufteils (19) nach unten erstreckt und mit dem Boden (11) verbunden ist,
**dadurch gekennzeichnet, dass** ein seitlicher Rahmenteil (22) über die Trennwand und den vertikalen Rahmenteil (20) an einer Unterseite des Handlaufteils (19) verbunden ist, und wobei
die Lampe (26) an dem vertikalen Rahmenteil (20) angebracht ist, und
der Kabelbaum (30) entlang des seitlichen Rahmenteils (22) durch das Montageglied (31) angebracht ist.

2. Traktor nach Anspruch 1, wobei
ein Stütz- bzw. Trägerrahmenabschnitt (33) mit einem an dem oberen Teil angebrachten Rückspiegel (34) an dem Handlaufrahmen (15) angebracht ist, um auf der Vorderseite des Handlaufteils (19) positioniert zu sein, und
der obere Teil des vertikalen Rahmenteils (20) zu der Rückseite hin gebogen ist, so dass der Handlaufteil (19) nach hinten von dem Trägerrahmenabschnitt separiert ist.

3. Traktor nach Anspruch 1 oder 2, wobei ein Präventivglied (27) zum Verhindern der Verstreuung von Boden von der Vorderseite zu dem Antriebsteil (4) an dem Handlaufrahmen (15) angebracht ist.

4. Traktor nach Anspruch 3, wobei
das Präventivglied (27) an dem Handlaufrahmen (15) angebracht ist, so dass sich der obere Endabschnitt des Präventivglieds (27a) von dem Handlauf nach unten separiert, und
eine Öffnung (32) zum Betrachten der Vorderseite von dem Antriebsteil (4) aus zwischen dem oberen Endabschnitt des Präventivglieds (27a) und dem Handlaufteil (19) bereitgestellt ist.

5. Traktor nach Anspruch 3 oder 4, wobei
die Lampe (26) und das Präventivglied (27) durch ein gemeinsames Verbindungsglied (28) in einem gemeinsam befestigten Zustand an dem Handlaufrahmen (15) angebracht sind.

## Revendications

1. Tracteur comprenant
un cadre de main courante (15) prévu sur une partie avant d'une zone de montée/descente (14) sur le côté droit ou gauche d'une partie de conduite (4) et pourvu d'une partie de main courante (19) sur une partie supérieure de celui-ci, une lampe (26) reliée au cadre de main courante (15),
un harnais (30) disposé le long du cadre de main courante (15) et connecté à la lampe (26), et
un élément de montage (31) pour monter le harnais (30) le long du cadre de main courante (15),
le tracteur comprenant en outre
un sol (11) au niveau d'une partie inférieure de la partie de conduite (4) et une paroi de séparation prévue entre la partie de conduite (4) et un moteur avant (5), dans lequel
le cadre de main courante (15) comprend
la partie de main courante (19) prévue le long de la direction gauche et droite, une partie de cadre verticale (20) s'étendant vers le bas depuis une portion d'extrémité externe de la partie de main courante (19) et connectée au sol (11), **caractérisé en ce que**
une partie de cadre latérale (22) est connectée en travers de la paroi de séparation et la partie de cadre verticale (20) sur un côté inférieur de la partie de main courante (19), et dans lequel
la lampe (26) est reliée à la partie de cadre verticale (20), et
le harnais (30) est relié le long de la partie de cadre latérale (22) par l'élément de montage (31).

2. Tracteur selon la revendication 1, dans lequel
une portion de cadre de support (33) ayant un rétroviseur (34) relié à la partie supérieure est reliée au cadre de main courante (15) de manière à être positionnée sur le côté avant de la partie de main courante (19), et
la partie supérieure de la partie de cadre verticale (20) est pliée vers le côté arrière de sorte que la partie de main courante (19) est séparée vers l'arrière de la portion de cadre de support.

3. Tracteur selon la revendication 1 ou 2, dans lequel un élément préventif (27) pour prévenir la dispersion de terre du côté avant à la partie de conduite (4) est relié au cadre de main courante (15).

4. Tracteur selon la revendication 3, dans lequel
l'élément préventif (27) est relié au cadre de main courante (15) de sorte que la portion d'extrémité supérieure de l'élément préventif (27a) se sépare vers le bas de la main courante, et
une ouverture (32) pour visualiser le côté avant depuis la partie de conduite (4) est prévue entre la portion d'extrémité supérieure de l'élément préventif (27a) et la partie de main courante (19).

5. Tracteur selon la revendication 3 ou 4, dans lequel
la lampe (26) et l'élément préventif (27) sont reliés au cadre de main courante (15) dans un état fixé conjointement par un élément de connexion commun (28).
